# EUROPÄISCHE PATENTANMELDUNG

(11) **EP 0 860 973 A2**
(43) Veröffentlichungstag der Anmeldung: **26.08.1998**
(21) Anmeldenummer: 98102924.2
(22) Anmeldetag: 19.02.1998
(51) Int. Cl.: H04M 3/42, H04Q 3/00

(54) **Kommunikationssystem, insbesondere privates Kommunikationssystem mit programmgesteuerten Prozeduren für Leistungsmerkmale**

(30) Priorität: 20.02.1997 DE 19706788
(71) Anmelder: SIEMENS AKTIENGESELLSCHAFT, 80333 München (DE)
(72) Erfinder: Vanlandeghem, Marc, 9800 Deinze (BE)

(57) **Zusammenfassung**

Ein Teilnehmer kann für von ihm aktivierbare Leistungsmerkmale, die im Sinne einer verbindungspriorisierenden-, leitenden-, verzögernden oder verbindungsabwehrenden Maßnahme über eine aktuelle Verbindung hinaus bestehen bleiben festlegen, daß Anrufe bestimmter Teilnehmer selektiv in einer bestimmten Weise behandelt werden sollen. Es kann festgelegt werden, für welche rufende Teilnehmer ein in Anspruch genommenes bzw. ein mit einer entsprechenden Kennung abgespeichertes Leistungsmerkmal ausgeführt bzw. nicht ausgeführt werden soll. Unter der Voraussetzung, daß die Rufnummer eines rufenden, z.B. externen Teilnehmers im System zur Verfügung steht, wird dann jeweils überprüft, ob für diesen Teilnehmer eine bestimmte Behandlungsart eines vorab festgelegten Leistungsmerkmals erfolgen soll. Ein Teilnehmer kann also in flexibler Weise eine Aktiv- bzw. Passivlegitimation hinsichtlich eines Leistungsmerkmals für einen ihn rufenden Teilnehmer festlegen. Es wird also grundsätzlich entweder ein hinsichtlich seiner Kennung abgespeichertes Leistungsmerkmal automatisch bei einem Verbindungsversuch eines in der vom Teilnehmer erstellten Liste enthaltenen Anrufers aktiviert oder es wird ein vom Teilnehmer aktiviertes Leistungsmerkmal bei einem in der abgespeicherten Liste enthaltenen anrufenden Teilnehmer ausgeführt oder seine Ausführung unterdrückt.

## Beschreibung

Kommunikationssysteme, wie z. B. programmgesteuerte private Kommunikationssysteme dienen zur Verbindung von daran angeschlossenen Endgeräten untereinander und zur Verbindung solcher Endgeräte mit an andere Kommunikationssysteme bzw. Kommunikationsnetze, z. B. öffentliche Kommunikationsnetze angeschlossenen Endgeräten Im Prinzip besteht ein Kommunikationssystem aus einer Vielzahl vermittlungstechnischer Funktionseinheiten und einer programmierbaren Datenverarbeitungseinrichtung mit einem Systemspeicher und wenigstens einem Systemprozessor. Dieser steuert die Funktionseinheiten und überwacht alle vermittlungstechnischen Abläufe. Zu diesem Zweck wird die Datenverarbeitungseinrichtung mit Informationen über den Betriebszustand der einzelnen Funktionseinheiten und über Zustandsänderungen, insbesondere über Eingaben an den angeschlossenen Endgeräten, informiert. Es kann deshalb bei Bedarf umgehend entsprechende Steueranweisungen und Meldungen erstellen und ausgeben. Um die speziellen Steuerungsaufgaben zu ermöglichen ist ein Betriebssystem vorgesehen, das die anfallenden und auch zu erledigenden Einzelaufgaben koordiniert.

Insbesondere in modern konzipierten Kommunikationssystemen sind eine Fülle unterschiedlicher Leistungsmerkmale bekannt, die einerseits im Rahmen des Kommunikationsdienstes "Sprache" den Bedienerkomfort steigern und andererseits über die Grundfunktion der Vermittlung hinausgehende Möglichkeiten bieten. Die durch die Aktivierung von Teilnehmerleistungsmerkmalen bedingten Prozedurablaufe werden beispielsweise mit Hilfe einer bestimmten Signalisierungsprozedur gesteuert. Für moderne Kommunikationssysteme ist man bestrebt, neben der Bereitstellung einer Vielzahl von unterschiedlichsten Leistungsmerkmalen, -die auch von der Art und dem Funktionsumfang der verwendeten Endgeräte abhängig sind- auch die von den Benutzern durchzuführenden Prozeduren zu vereinfachen. Es ist beispielsweise vorgesehen, jeweils ein bestimmtes Leistungsmerkmal durch die Betätigung einer am jeweiligen Endgerät hierfür vorgesehenen Taste in Anspruch zu nehmen. Eine andere Möglichkeit hierfür besteht darin, eine bestimmte Kennzahl oder eine Kennzahlkombination einzuwählen. Zur Realisierung von derartigen leistungsmerkmals-spezifischen Steuerprozeduren beinhaltet das System einzelne Programmsteuerungen, die auf die in den entsprechenden Modulen des Systemspeichers enthaltenen Steuerdaten zugreifen. Ein von einem Teilnehmer in An-Spruch genommenes Leistungsmerkmal, das über eine aktuell bestehende Gesprächsverbindung hinausgehend bestehen bleibt, betrifft mit seiner Wirkung grundsätzlich alle Verbindungsversuche zu diesem Teilnehmer. Ein solches Leistungsmerkmal kann beispielsweise eine verbindungsleitende, eine verbindungsabwehrende oder eine die Erreichbarkeit erhöhende Wirkung zur Folge haben. Es wird also für alle rufenden Teilnehmer die gewünschte Kommunikationsbeziehung in bestimmter und für alle übereinstimmenderweise beeinflußt.

Es ist die Aufgabe der Erfindung im Zusammenhang mit Leistungsmerkmalen, die im Kommunikationssystem für eine Kommunikationsbeziehung zur Verfügung stehen, die Betriebsweise zu verbessern. Die Lösung dieser Aufgabe erfolgt, insbesondere ausgehend von einem privaten Kommunikationssystem mit den kennzeichnenden Merkmalen des Patentanspruchs 1. Das Wesentliche der Erfindung besteht darin, daß mittels einer vorgegebenen Prozedur diejenigen Leistungsmerkmale, die durch den Teilnehmer berechtigterweise aktivierbar sind, vorab jeweils in der Weise festlegbar sind, daß sie unter Vorgabe einer bestimmten Behandlungsart wenigstens einen von ihm vorab ausgewählten Ursprungsteilnehmer, der also einen Verbindungsversuch zu seinem Endgerät als Zielteilnehmer unternimmt, selektiv betreffen. Es kann also erfindungsgemäß festgelegt werden, für welche, insbesondere externe rufende Teilnehmer ein in Anspruch genommenes bzw. ein mit einer entsprechenden Kennung abgespeichertes Leistungsmerkmal ausgeführt bzw. nicht ausgeführt werden soll. Ein Teilnehmer kann also in flexibler Weise eine Aktiv- bzw. Passivlegitimation hinsichtlich eines bestimmten Leistungsmerkmales für einen bestimmten rufenden Teilnehmer festlegen. Hierzu sind die jeweils ausgewählten Teilnehmer hinsichtlich ihres Identitätskennzeichens, beispielsweise in Form ihrer vollständigen Rufnummer durch den Zielteilnehmer leistungsmerkmals-orientiert in Zuordnung zu einer ihn kennzeichnenden Information in einem Speicherbereich des Systemspeichers einspeicherbar. Dieser Speicherbereich kann ein dem betreffenden Zielteilnehmer individuell zugeordneter Bereich sein. Unter der Voraussetzung, daß das Identitätskennzeichen, z. B. in Form dieser Rufnummer bei einem Verbindungsversuch zu diesem betreffenden Zielteilnehmer vorliegt, wird durch die Steuerung überprüft, ob das vorliegende Identitätskennzeichen (Rufnummer des Ursprungsteilnehmers) in dem Speicherbereich enthalten ist. Ist dies der Fall, so wird erfindungsgemäß im Rahmen des aktuellen Verbindungsversuches im Falle eines zu berücksichtigenden Leistungsmerkmals hierfür die vorbestimmte Behandlung vorgenommen. Mit Bezug auf eine gewünschte Kommunikationsverbindung wird also aufgrund der gespeicherten Parameter ein hierfür festgelegtes Leistungsmerkmal nach bestimmten programmtechnisch festgelegten Kriterien behandelt. Dies betrifft insbesondere gesprächsübergreifend wirkend Leistungsmerkmale die eine Verbindung in bestimmter Weise -z. B. im Sinne einer verbindungspriorisierenden, leitenden- oder verbindungsabwehrenden Maßnahme- beeinflussen. Diese vorbestimmte Behandlung kann sich auf ein Leistungsmerkmal beziehen, das jeweils durch den Zielteilnehmer grundsätzlich in Anspruch genommen wurde oder für ihn als dauerhaft in Anspruch genommen gilt. Durch die selektive Zuordnung dieses in Anspruch genommenen Leistungsmerkmals zu bestimmten anrufenden Teilnehmern kann entweder für eine Vielzahl von solchen Teilnehmern dieses Leistungsmerkmal nicht gelten oder es kann für eine Vielzahl von Teilnehmern wirksam werden. Es wird also ein aktiviertes Leistungsmerkmal bei einem in der abgespeicherten Liste enthaltenen anrufenden Teilnehmer ausgeführt oder seine Ausführung wird unterbunden.

Es kann sich auch um ein Leistungsmerkmal handeln, das durch den Zielteilnehmer mit seiner entsprechenden Kennung in dem ihm individuell zugeordneten Speicherbereich abgespeichert wird. Dieses Leistungsmerkmal wird dann automatisch bei einem Verbindungsversuch eines in der erstellten Liste enthaltenen Teilnehmers, insbesondere eines externen Teilnehmers wirksam eingeleitet. Es kann durch eine für die jeweilige Behandlung charakteristische Kennung festgelegt werden, ob ein Leistungsmerkmal in der Regel für wenige vorbestimmte Teilnehmer ausgeführt oder nicht ausgeführt wird.

Gemäß einer Weiterbildung der Erfindung sind die abgespeicherten Einträge am Endgerät des Zielteilnehmers anzeigbar und durch vorgegebene Prozeduren editierbar. Es kann also vermittels einer bestimmen Prozedur eine Löschung und/oder Anderung der Einträge erfolgen, so daß die diesbezüglich aktuelle Vorstellung des Teilnehmers berücksichtigt werden kann. Weitere vorteilhafte Ausgestaltungen der Erfindung sind den restlichen Unteransprüchen zu entnehmen.

Die Erfindung wird im Folgenden anhand eines figürlich dargestellten Ausführungsbeispiels erläutert.

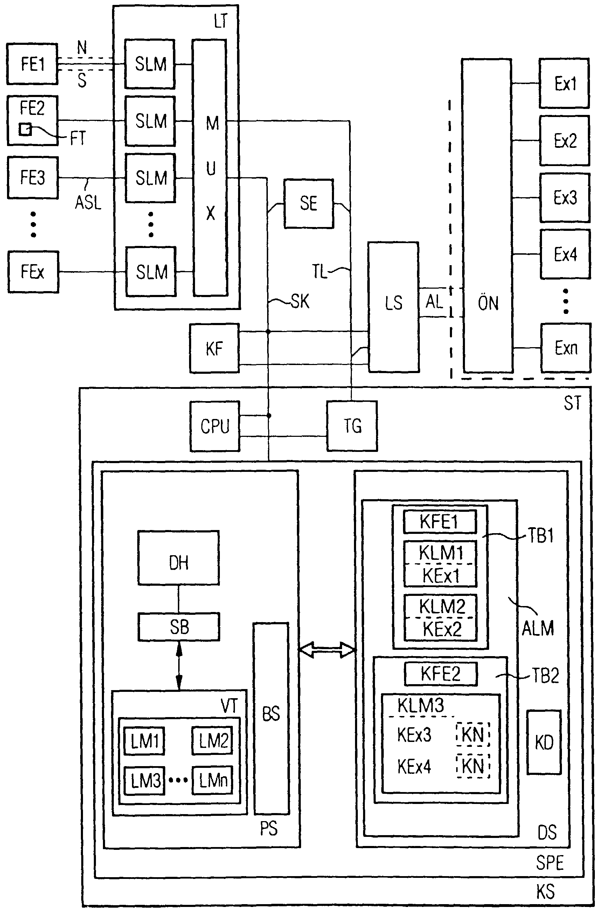

In der Figur ist als Blockschaltbild die Struktur eines programmgesteuerten privaten Kommunikationssystems schematisch dargestellt. Es sind lediglich die zum Verständnis der Erfindung notwendigen Komponenten gezeigt. Zentraler Bestandteil des privaten Kommunikationssystems KS ist ein Koppelfeld KF über das Endgeräte - von denen Fernsprechendgeräte FE1-FEx schematisch angedeutet sind - miteinander bzw. mit zu einem öffentlichen Kommunikationssystem ÖN führenden Leitungen AL verbindbar sind. Das zentrale Koppelfeld steht unter dem Steuereinfluß einer zentralen Systemsteuerung ST, die neben dem Zentralprozessor CPU eine Speichereinrichtung SPE und eine Takteinheit TG enthält. Der Zentralprozessor steuert sämtliche Vermittlungsvorgänge und besorgt eine Aufbereitung und Zuteilung der Steuerdaten. Diese Aufgaben können auch auf mehrere Prozessoren aufgeteilt sein. Der Zugriff zu einer Amtsleitung AL erfolgt über die Schnittstelle LS. Diese Schnittstelle beinhaltet beispielsweise einen ISDN-Teil, der z.B. als standardisierte SO-Schnittstelle ausgebildet sein kann. Die Peripherie des Kommunikationssystems wird ergänzt durch eine Signalisierungseinheit SE, die zur Zeichenversorgung des Kommunikationssystems vorhanden ist.

Im Kommunikationssystem KS sind Leitungsanschlußeinrichtungen, symbolisiert durch die Leitungsanschlußeinrichtung LT vorhanden. Diese enthalten jeweils Teilnehmeranschlußmodule SLM. Die Teilnehmeranschlußmodule sind über Teilnehmeranschlußleitungen ASL jeweils mit einem der Kommunikationsendgeräte FE verbunden. Sie sind grundsätzlich entweder für den Anschluß von analogen oder für den Anschluß von digitalen Kommunikationsendgeräten vorgesehen. Die Nachrichtenübertragung erfolgt bei digitalen Kommunikationsendgeräten über Nachrichtenkanäle N und die Signalisierung wird über einen zusätzlichen Kanal S übermittelt. Die vom jeweiligen Kommunikationsendgerät gelieferten digitalen Sprachinformationen werden über eine Multiplexeinrichtung MUX zum Koppelfeld KF weitergegeben. Vermittlungstechnisch gesteuert werden die Leitungsanschlußeinrichtungen LT von der Systemsteuerung ST. Jede Leitungsanschlußeinrichtung ist über einen Signalisierungskanal SK mit der Systemsteuerung verbunden. Über diesen Signalisierungskanal werden die Informationen z.B. mit Hilfe der bekannten HDLC-Übermittlungsprozedur ausgetauscht. Die durch die Systemsteuerung angebotenen Taktsignale werden über eine Taktleitung TL an die Leitungsanschlußeinrichtungen verteilt. Durch die Einheit TG wird symbolisiert, daß durch sie die Taktsignale zur Verfügung gestellt werden.

Der Systemprozessor CPU der Systemsteuerung ST hat Zugriff zu den in der Speichereinrichtung SPE abgelegten Informationen.

Diese Speichereinrichtung ist grundsätzlich in den Programmspeicher PS und in den Datenspeicher DS unterteilt. Im Programmspeicher PS sind unter anderem das Betriebssystem BS und die zu ihm bezüglich der Peripherietechnik, der Betriebstechnik, der Sicherheitstechnik und der Vermittlungstechnik gehörenden Programme abgespeichert. Das Betriebssystem BS koordiniert die für das Kommunikationssystem KS typische Vielzahl von quasi gleichzeitig anfallenden und auch zu erledigenden Einzelaufgaben. Seine wesentliche Aufgabe besteht darin, in Abhängigkeit von eingetroffenen oder innerhalb der Systemsteuerung gebildeten Anreizen dem Systemprozessor CPU, der die eigentliche ausführende Einheit der Systemsteuerung ist, Verarbeitungsvorschriften zuzuweisen. Diese beinhalten eine Reaktion auf die betreffenden Anreize. Für jeden möglichen Anreiz steht deshalb in der Systemsteuerung eine anreizindividuelle Verarbeitungsvorschrift zur Verfügung, die als jeweiliges Programmodul im Programmspeicher PS hinterlegt ist. In der Figur ist das vermittlungstechnische Programmodul VT stellvertretend für die anderen Module angedeutet. Mit LM ist ein der Vermittlungstechnik zugeordnetes Modul bezeichnet, das symbolisch für die zur Realisierung der einzelnen Leistungsmerkmale vorhandenen Programmodule steht.

In dem Speicherteil DS ist als Teileinheit der Datenbasis der Bereich KD angedeutet. In diesem Speicherbereich sind die Kundendaten, wie z.B. die den einzelnen Endgeräten FE1...FEx zugeteilten Berechtigungen und die Systemkonfiguration abgelegt. Der Datenspeicher DS dient unter anderem der Aufnahme von temporären Daten zur Programmablaufsteuerung. Es werden in ihm auch Daten übernommen, die während eines durch ein Endgerät initiierten Verbindungsaufbaus oder bei der Inanspruchnahme eines Dienstes bzw. eines Leistungsmerkmals abgefragt werden. In einem nicht gezeigten endgeräteindividuellen Speicherabschnitt werden sämtliche auf das jeweilige Endgerät bezogene Daten abgelegt. Es ist also daraus sowohl der aktuelle vermittlungstechnische Zustand - beispielsweise ob der betreffende Teilnehmer den Handapparat abgehoben hat, ob er gerufen wird usw. - als Speicherinformation für die Steuerung entnehmbar. Ebenso werden in vorgegebenen Speicherplätzen die jeweils in Anspruch genommenen Dienste bzw. Leistungsmerkmale abgespeichert. Diese Speicherabschnitte sind als dynamische Datenbasis für die einzelnen Endgeräte anzusehen.

Für jedes dieser Endgeräte ist zu seiner Steuerung ein an das jeweilige Endgerät angepaßtes Leitungsprogrammodul vorhanden, das in Zuordnung zu dem Programmspeicher PS durch das Modul DH symbolisiert ist. Jedes dieser vorhandenen Module DH bietet eine systemeinheitliche Schnittstelle zur vermittlungstechnischen Strukturebene, die durch das Vermittlungsprozedur-Programmodul VT repräsentiert ist. Der Informationsaustausch zwischen den beiden genannten Struktur- bzw. Steuerungsebenen erfolgt mittels definierten Meldungen, die beispielsweise über die angedeutete Software-Bus-Struktur SB übertragen werden. Diese kann als integraler Bestandteil des Betriebssystems angesehen werden.

Im Kommunikationssystem KS sollen eine Mehrzahl von Leistungsmerkmalen in Anspruch genommen werden können, die unter anderem eine Kommunikationsbeziehung zu einem Teilnehmer, insbesondere eine von einem externen Teilnehmer Ex1 bis Exm ausgehende Kommunikationsverbindung, jeweils in bestimmter Weise beeinflussen. Beispiele hierfür sind die Möglichkeit des sogenannten Direktansprechens, die Realisierung eines bevorzugten Rufes, die Freigabe zum Anklopfen, das Durchbrechen eines bestehenden Anrufschutzes, das Aufschalten auf bzw. das Anklopfen bei einem besetzten Teilnehmer. Weiterhin wären beispielsweise die Anzeige eines sogenannten Zweitanrufes und die im Zusammenhang mit einer besonderen Gerätekonstellation wie z.B. einer Chefsprechstelle und einer ihr zugeordneten Sekretärspeicherstelle bestehenden Möglichkeiten zu nennen. Weitere Beispiele wären die Möglichkeit des Rückrufes im Besetztfall bzw. im sogenannten Freifall und die Möglichkeit des Abwurfes in diesen Fällen nach Zeitablauf oder sofort.

Zur Realisierung von leistungsmerkmalspezifischen Steuerprozeduren beinhaltet die Steuerung ST einzelne Programmsteuerung, die auf die in den entsprechenden Modulen der Speichereinrichtung SPE enthaltenen Steuerdaten zugreifen. Dies ist durch die Module LM1 bis LMn innerhalb des vermittlungstechnischen Moduls VT angedeutet. Für die im Zusammenhang mit den unterschiedlichen Leistungsmerkmalen stehenden Funktionsläufe werden dann die in dem jeweils zugeordneten Modul enthaltenen Daten abgerufen. Es besteht nun grundsätzlich die Möglichkeit für die einzelnen Leistungsmerkmale festzulegen, daß sie nur für bestimmte anrufende Teilnehmer gelten bzw. nicht gelten sollen. Diese Möglichkeit setzt voraus, daß die Identifikationsinformation für den jeweils rufenden Teilnehmer im System zur Verfügung steht. In modernen Kommunikationssystemen wird bei der Abgabe einer Wahlinformation eines daran angeschlossenen Endgerätes die vollständige Rufnummer dieses Endgerätes zum jeweiligen Zielkommunikationssystem übermittelt. Zum Beispiel wird unter der Voraussetzung einer ISDN-Verbindung die Rufnummer eines externen Endgerätes über den Signalisierungskanal zum Zielkommunikationssystem übertragen. Die mit dem Aufbau einer Verbindung gelieferte Rufnummer des rufenden externen Teilnehmers dient nun grundsätzlich dazu, die in der Liste ALM enthaltenen Einträge daraufhin zu prüfen, ob diese übermittelte Rufnummer darin enthalten ist. Diese Liste ist beispielsweise im Datenspeicher DS der Speichereinheit SPE eingerichtet. Ein Teilnehmer, beispielsweise der Teilnehmer FE1 hat die Möglichkeit mittels einer bestimmten Prozedur in einem ihm individuell zugeordneten Bereich dieser Liste die Einträge zu erstellen und zu verwalten. In diesen teilnehmerindividuellen Bereich TB1, der durch die diesen Teilnehmer FE1 zugeordnete Kennung KFE1 charakterisiert ist, können nun beispielsweise durch den Teilnehmer Kennungen für bestimmte Leistungsmerkmale eingetragen werden.

Es wird beispielsweise angenommen, daß der Teilnehmer des Endgerätes FE1 einem externen Teilnehmer, beispielsweise dem Teilnehmer des Endgerätes Ex1 die Möglichkeit bieten möchte, ihn direkt anzusprechen. Zu diesem Zweck kann er z.B. in dem ihm zugeordneten Speicherbereich TB1, der durch die Kennung KFE1 seines Endgerätes FE1 als solcher gekennzeichnet ist, das für das Merkmal 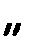 Direktansprechen 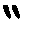 stehende Kennzeichen KLM1 einspeichern. Dieses Kennzeichen weist auf die bezüglich der notwendigen Ablaufsteuerung in dem Modul LM1 enthaltenen Daten hin. Eine vorgegebene Prozedur ermöglicht es dem Teilnehmer FE1 in Zuordnung zu diesen Kennzeichen 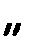 Direktansprechen 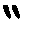 denjenigen Teilnehmer einzuspeichern, den er in dieser Weise begünstigen will. Dies sei beispielsweise der externe Teilnehmer Ex1. Dieser ist in dieser Liste durch die ihn charakterisierende Kennung KEx1 gekennzeichnet. Diese Kennung stellt beispielsweise die vollständige Rufnummer dieses Teilnehmers dar. Im Ausführungsbeispiel soll durch den Teilnehmer des Endgerätes FE1 noch eine weitere Kennung KLM2 eingetragen worden sein, die z.B. das Merkmal für einen 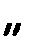 bevorzugten Ruf 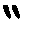 darstellt. In Zuordnung zu diesem Merkmal besteht die Möglichkeit, externe Teilnehmer denen er dieses Merkmal zubilligen will, einzuspeichern. Im vorliegenden Fall ist beispielhaft der Teilnehmer des Endgerätes Ex2 durch seine Kennung KEx2, die wiederum die Rufnummer dieses Teilnehmers darstellen kann, eingespeichert.

In dem Speicherabschnitt TB2, der dem Teilnehmer des Endgerätes FE2 zugeordnet ist und der entsprechend durch die Kennung KFE2 als solcher definiert ist, ist die Kennung KLM3 enthalten.

Die diesem Merkmal zugrundeliegenden Abläufe sollen in dem Modul LM3 enthalten sein. Dieses Merkmal kann beispielsweise die 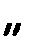 Freigabe zum Anklopfen 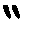 betreffen. Grundsätzlich kann eine Kennung entweder bei der Betätigung einer entsprechenden Inanspruchnahmetaste, beispielsweise der Taste FT, automatisch oder ohne eine solche unmittelbare Inanspruchnahme durch eine bestimmte Prozedur in den einem Teilnehmer zugeordneten Abschnitt eingetragen werden. Um zu verhindern, daß bei einer Inanspruchnahme eines Merkmals dieses für alle Teilnehmer, die einen Verbindungsversuch zu dem Endgerät FE2 vornehmen gilt, besteht für diesen Teilnehmer diesbezüglich eine Selektionsmöglichkeit. Mit Hilfe einer vorgegebenen Prozedur kann er diejenigen Teilnehmer in Zuordnung zu der Kennung für ein bestimmtes Funktionsmerkmal einspeichern, die selektiv behandelt werden sollen. Im Ausführungsbeispiel erfolgte durch den Teilnehmer FE2 die Einspeicherung der Teilnehmer Ex3 und Ex4. Diese sind mit ihrer Kenninformation, die jeweils ihrer Rufnummer entspricht, in dieser Liste, die sich auf das Funktions- bzw. Leistungsmerkmal KLM3 bezieht, enthalten.

In gleicher Weise kann durch die einzelnen Teilnehmer FE1...FEx bezüglich anderer Merkmale, die für von ihnen jeweils bestimmte externe Teilnehmer gelten sollen oder die für bestimmte Teilnehmer nicht ausgeführt werden sollen, verfahren werden.

Die bei einem ankommenden Verbindungswunsch eines externen Teilnehmers voraussetzungsgemäß übermittelte Rufnummer dient nun u.a. grundsätzlich dazu, die bezogen auf den gewünschten Teilnehmer abgespeicherten Listen daraufhin zu überprüfen, ob diese übermittelte Rufnummer darin enthalten ist. Es wird also z.B. bei einer angeforderten Verbindung des Teilnehmers des externen Endgerätes Ex1 zum Teilnehmer des Endgerätes FE1 bei dieser Überprüfung festgestellt, daß die dabei übermittelte Rufnummer mit der im Zusammenhang mit dem für 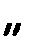 Direktansprechen 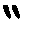 stehenden Merkmal LKM1 gespeicherten Rufnummer Kex1 übereinstimmt. In diesem Beispiel führt dies dann dazu, daß nach Abgabe eines entsprechenden Warntones vollautomatisch am Endgerät des Teilnehmers FE1 der Lautsprecher und das Mikrofon aktiviert wird. Der Teilnehmer des Endgerätes FE1 kann also ohne zusätzliche weitere Handhabungen unmittelbar das Gespräch mit dem externen Teilnehmer des Endgerätes Ex1 aufnehmen.

Wird beispielsweise bei der Vergleichsprüfung zwischen der übermittelten und der eingespeicherten Rufnummer festgestellt, daß diese mit der im Abschnitt TB1 eingespeicherten Rufnummer des Teilnehmers des Endgerätes Ex2 übereinstimmt, so wird das für diesen Teilnehmer vorgesehene Merkmal KLM2, das im Ausführungsbeispiel für das Merkmal 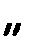 bevorzugter Ruf 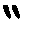 steht, aktiviert. In einem solchen Falle wird ein Anruf eines in der Liste enthaltenen externen Teilnehmers mit höchster Priorität signalisiert. Sollten mehrere Anrufe für dieses Endgerät FE2 in einer Warteposition vorhanden sein, so wird jeweils der Anruf des in der Liste enthaltenen Teilnehmers, im Beispiel des Teilnehmers Ex2, als erster signalisiert, wenn das gewünschte Endgerät FE1 frei wird.

Wie bereits erwähnt, betreffen die Listeneinträge in dem Abschnitt TB2 die 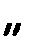 Freigabe zum Anklopfen 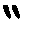 durch externe Teilnehmer. Gemäß Festlegung soll dieses Merkmal z.B. bei Anrufen der externen Teilnehmer der Endgeräte Ex3 bis Ex4 nicht gelten. In einem solchen Fall wird dann zusätzlich eine diese Tatsache charakterisierende Kennung KN eingespeichert. Es kann jedoch auch vorgesehen sein, daß in umgekehrter Zuordnung eine solche 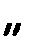 Freigabe zum Anklopfen 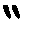 nur für die in diesen Abschnitt in Zuordnung zu diesem Merkmal abgespeicherten Teilnehmer erfolgen soll. Durch eine vorgegebene Prozedur kann dann in einem solchen Fall durch den Teilnehmer des Endgerätes FE2 ohne grundsätzliche Inanspruchnahme dieses Merkmals die diesem Merkmal zugeordnete Kennung KLM3 gezielt eingespeichert werden. Die Freigabe zu Anklopfen würde dann nur für die in dieser Liste TB2 durch den Teilnehmer FE2 abgespeicherten externen Teilnehmer erfolgen. Alle anderen anrufenden Teilnehmer hätten nicht diese Möglichkeit des 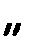 Anklopfens 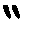 . Dieses Anklopfen erfolgt bei einem Anruf eines der in dieser Liste enthaltenen externen Teilnehmers jeweils in den Fällen, in denen das Endgerät FE2 besetzt ist, in Form einer speziellen Signalisierung. Im Gegensatz zu einem normalen Besetztfall wird dem rufenden Teilnehmer nicht der Besetztton sondern der sogenannte Freiton übermittelt. Durch die Signalisierung wird dem Teilnehmer des Endgerätes FE2 mitgeteilt, daß der Anrufer ein von ihm für dieses Merkmal ausgewählter externer Teilnehmer ist.

Grundsätzlich kann an die Stelle der für das Ausführungsbeispiel gewählten Speicherorganisation eine andere Form der Merkmalszuordnung zu den einzelnen Endgeräten gewählt werden. Die für das Ausführungsbeispiel genannten Merkmale sind nur beispielhaft genannt. Das geschilderte Prinzip ist in gleicher Weise für andere bei einer Gesprächsverbindung in Anspruch zu nehmende Merkmale gültig. Es sei beispielsweise auf die besondere Konstellation einer Chefsprechstelle zu einer Sekretärsprechstelle hingewiesen. Üblicherweise werden Anrufe für die Chefsprechstelle zunächst an die Sekretärsprechstelle vermittelt. Durch den Teilnehmer der Chefsprechstelle kann beispielsweise eine Liste erstellt werden, in der selektiv diejenigen externen Teilnehmer eingespeichert sind, die direkt zur Chefsprechstelle ohne Signalisierung bei der Sekretärsprechstelle gelangen sollen.

Eine andere beispielhaft zu nennende Möglichkeit wäre die Festlegung, daß ein automatisches Aufschalten bei einem besetzt vorgefundenen Teilnehmer durch bestimmte in der Liste enthaltenen externe Teilnehmer möglich sein soll.

## Patentansprüche

1. Kommunikationssystem, insbesondere privates Kommunikationssystem zur Verbindung von Kommunikationsendgeräten, bei dem von einem Teilnehmer unterschiedliche, insbesondere gesprächsübergreifend wirkende Leistungsmerkmale in Anspruch genommen werden können, wobei es einen Systemspeicher (SPE) zur Speicherung von Programmodulen und von Daten und wenigstens einen Systemprozessor (CPU) mit einem Betriebssystem zur Abarbeitung der Programmodule aufweist und wobei bei einer zu vermittelnden Verbindung ein Identitätskennzeichen des Ursprungsteilnehmers zur Verfügung steht,
**dadurch gekennzeichnet,**
daß mittels einer vorgegebenen Prozedur die durch einen Teilnehmer im System berechtigterweise aktivierbaren Leistungsmerkmale vorab jeweils in der Weise festlegbar sind, daß sie unter Vorgabe einer bestimmten Behandlungsart mindestens einem von ihm ausgewählten Ursprungsteilnehmer, der einen Verbindungsversuch zu seinem Endgerät als Zielteilnehmer unternimmt, selektiv betreffen und daß die ausgewählten Ursprungsteilnehmer hinsichtlich ihres Identitätskennzeichens durch den Zielteilnehmer in Zuordnung zu einer ihn kennzeichnenden Information in einem Speicherbereich des Systemspeichers einspeicherbar sind, der bei einem Verbindungsversuch zu diesem Zielteilnehmer daraufhin überprüft wird, ob das dabei vorliegende Identitätskennzeichen des Ursprungsteilnehmers darin enthalten ist, und daß falls dies zutrifft, im Rahmen dieses aktuellen Verbindungsversuches die vorbestimmte Behandlung des zugeordneten Leistungsmerkmals erfolgt.

2. Kommunikationssystem nach Anspruch 1,
**dadurch gekennzeichnet,**
daß die vorbestimmte Behandlung sich auf ein Leistungsmerkmal bezieht, das jeweils durch den Zielteilnehmer in Anspruch genommen wurde oder als dauerhaft in Anspruch genommen gilt, und daß für dieses betreffende Leistungsmerkmal die im Zusammenhang mit der selektiven Bestimmung notwendigen Einträge einspeicherbar sind.

3. Kommunikationssystem nach Anspruch 1,
**dadurch gekennzeichnet,**
daß die vorbestimmte Behandlung sich auf ein Leistungsmerkmal bezieht, das in Zuordnung zu dem Zielteilnehmer mit Bezug auf den mindestens einen ausgewählten Teilnehmer mit seiner charakterisierenden Kennung abgespeichert ist, und daß bei einem Verbindungsversuch eines ausgewählten Ursprungsteilnehmers unabhängig von einer festgelegten andersartigen Maßnahme für das betreffende Leistungsmerkmal vollautomatisch die vorbestimmte Behandlung eingeleitet wird.

4. Kommunikationssystem nach einem der Ansprüche 1 bis 3,
**dadurch gekennzeichnet,**
daß bei einer festgestellten Übereinstimmung die vorbestimmte Behandlung in einer Ausführung des betreffenden Leistungsmerkmals besteht.

5. Kommunikationssystem nach einem der Anspruch 1,
**dadurch gekennzeichnet,**
daß bei einer festgestellten Übereinstimmung die vorbestimmte Behandlung darin besteht, daß das betreffende Leistungsmerkmal bei einem Verbindungsversuch des ausgewählten Teilnehmers nicht ausgeführt wird.

6. Kommunikationssystem nach Anspruch 4 oder 5,
**dadurch gekennzeichnet,**
daß die Ausführung oder Nichtausführung des Leistungsmerkmals durch eine gespeicherte und für die jeweilige Behandlungsart charakteristische Kennung festlegbar ist.

7. Kommunikationssystem nach Anspruch 1 oder 2,
**dadurch gekennzeichnet,**
daß die Inanspruchnahme jedes der betreffenden Leistungsmerkmale auf Grund eines vom Zielteilnehmer eingegebenen leistungsmerkmals-spezifischen Prozedur (Tastenbetätigung, Kennzahleinwahl) erfolgt oder durch eine betriebstechnische Eingabe dauerhaft festgelegt ist.

8. Kommunikationssystem nach einem der Ansprüche 1 bis 3,
**dadurch gekennzeichnet,**
daß die im Zusammenhang mit der selektiven Einspeicherung eines Ursprungsteilnehmers und mit der das Leistungsmerkmal charakterisierenden Kennung in einem dem Zielteilnehmer individuell zugeordneten Speicherabschnitt des Systemspeichers erfolgt.

9. Kommunikationssystem nach Anspruch 1,
**dadurch gekennzeichnet,**
daß mit der Zurücknahme der Inanspruchnahme eines Leistungsmerkmals die es betreffenden Speichereinträge automatisch gelöscht werden.

10. Kommunikationssystem nach einem der Ansprüche 1 bis 8,
**dadurch gekennzeichnet,**
daß die abgespeicherten Einträge am Endgerät des Zielteilnehmers anzeigbar und durch vorgegebene Prozeduren editierbar sind, so daß durch eine Löschung und/oder Änderung der Einträge die diesbezügliche aktuelle Vorstellung des Teilnehmers berücksichtigt werden kann.

11. Kommunikationssystem nach einem der vorhergehenden Ansprüche,
**dadurch gekennzeichnet,**
daß unter der Voraussetzung eines privaten Kommunikationssystems die ausgewählten Ursprungsteilnehmer externe Teilnehmer darstellen.
